# EUROPÄISCHE PATENTSCHRIFT

(11) **EP 0 507 787 B1**
(45) Veröffentlichungstag und Bekanntmachung des Hinweises auf die Patenterteilung: **08.06.1994**
(21) Anmeldenummer: 91900155.2
(22) Anmeldetag: 15.12.1990
(51) Int. Cl.: A21D 8/04

(54) **VERFAHREN ZUR HERSTELLUNG EINES SAUERTEIGPRODUKTES**
PROCESS FOR MANUFACTURING A LEAVEN PRODUCT
PROCEDE POUR LA FABRICATION D'UN PRODUIT AU LEVAIN

(30) Priorität: 21.12.1989 DD 336042
(43) Veröffentlichungstag der Anmeldung: 14.10.1992
(73) Patentinhaber: ERNST BÖCKER KG, D-32378 Minden (DE)
(72) Erfinder: WALTER, Ulrich, D-4973 Vlotho (DE); SANDAU, Petra, O-1580 Potsdam (DE); FÄRBER, Ina, D-1560 Potsdam (DE)
(74) Vertreter: Pfeifer, Hans-Peter, Dr., Dr. H.-P. Pfeifer Dr. P. Jany, Patentanwälte
(86) Internationale Anmeldenummer: DE9000968
(87) Internationale Veröffentlichungsnummer: WO9109528

(56) Entgegenhaltungen:
- EP-A- 0 131 114

## Beschreibung

Die Erfindung betrifft ein Verfahren zur Herstellung eines Sauerteigproduktes, bei dem man ein Getreidemahlprodukt (insbesondere Roggen oder Weizenmehl, gegebenenfalls mit Schrotanteilen) mit Wasser und Mikroorganismen enthaltendem Anstellgut zu einem Sauerteigansatz mischt und reifen läßt, wobei der Sauerteigansatz einen Fermentationsprozeß durchläuft, in welchem die Mikroorganismen nach einer Lag-Phase in eine exponentielle Wachstumsphase übergehen.

Sauerteigprodukte werden vor allem in Bäckereien zur Herstellung von Sauerteig-Backwaren benötigt. Beispielsweise eignet sich ein "Reinzuchtsauerteig", der eine kontrollierte Population an Mikroorganismen (im wesentlichen Lactobacillen und Hefen) enthält, als Starter für den wöchentlich empfohlenen Neuansatz des Betriebssauerteigs. Auch als Backzusätze für das Backen von Sauerteig-Backwaren werden Sauerteigprodukte angeboten.

Nach dem Mischen eines Sauerteigansatzes ändert sich die Zahl der Sauerteigmikroorganismen zunächst nur geringfügig. Diese Anlaufphase, die als Lag-Phase bezeichnet wird, benötigen die Mikroorganismen, um unter Aufnahme von Nährstoffen in einen vermehrungsfähigen Zustand zu kommen. Sie kann von sehr unterschiedlicher Dauer sein.

Nach Ablauf der Lag-Phase beginnen die Mikroorganismen sich durch Teilung zu vermehren. Da sich ihre Zahl in jeder Generation verdoppelt, entsteht ein exponentielles Wachstum. Man spricht von der exponentiellen Wachstumsphase. Das schnelle Wachstum ist von einem intensiven Stoffwechsel begleitet, bei dem die Mikroorganismen Nährstoffe aufnehmen und Stoffwechselprodukte ausscheiden.

Voraussetzung des exponentiellen Wachstums ist deshalb eine hohe Konzentration von Nährstoffen und eine niedrige Konzentration von Hemmfaktoren, insbesondere Stoffwechselprodukten. Die Wachstumsgeschwindigkeit vermindert sich, wenn mit zunehmender Vermehrung die Stoffwechselprodukte zunehmen. Nach einer Verzögerungs-Phase geht der Ansatz schließlich in eine stationäre Phase über, in der die Mikroorganismenkonzentration praktisch gleich bleibt.

Stoffwechselprodukte der Mikroorganismen sind überwiegend Säuren (Milchsäure, Essigsäure). Infolgedessen verändert sich der Säuregrad während der Sauerteiggärung in guter Näherung proportional zur Wachstumskurve. Die Säuerungskurve wird deswegen in der Praxis benutzt, um den Verlauf des Fermentationsprozesses zu beobachten.

Die Qualität von mit Sauerteigprodukten hergestellten Backwaren ist wesentlich von den verwendeten Sauerteigprodukten beziehungsweise der Sauerteigführung (also der Steuerung des Fermentationsprozesses) abhängig. Traditionell werden optimale Ergebnisse bei Verwendung eines frisch hergestellten "Vollsauer" erzielt, d.h. eines Sauerteiges, der ausgehend von einem frischen Anstellgut in einem vielstündigen ein- oder mehrstufigen Prozeß in die exponentielle Wachstumsphase gebracht und in diesem Zustand, d.h. während er sich in voller Gärung befindet, verarbeitet wird. Diese Verfahrensweise erfordert in der Bäckerei einen erheblichen personellen und organisatorischen Aufwand.

Dieser hohe Aufwand bei der "Tages-Vollsauerteig-Führung" führte dazu, die Säurebildung der Mikroorganismen durch Zusatz von Säuerungsmitteln, organischen Säuren wie Milchsäure, Essigsäure oder Zitronensäure, bei gleichzeitigem Zusatz von Hefe, zu ersetzen. Solche Säuerungsmittel, die praktisch keine lebenden oder revitalisierbaren Mikroorganismen enthalten, sind keine Sauerteigprodukte im Sinne der vorliegenden Erfindung. Ihre Verwendung führt zu erheblichen geschmacklichen Beeinträchtigungen des Aromas.

Um jederzeit Sauerteig zur Verfügung zu haben, wurden zahlreiche Verfahren zur Herstellung von haltbarem Sauerteig vorgeschlagen.

In der DDR-Patentschrift 656 963 wird beschrieben, daß ein Sauerteig aus Roggenmehl, Wasser und einer aus Sauerteig gewonnenen Reinzuchtkultur in einem Verhältnis von 1 : 1 : 0,05 bei 30 - 35° C über längere Zeit unter Bildung erheblicher Säuremengen vergoren wird. Anschließend wird der Ansatz mit Roggenmehl vermischt und an der Luft getrocknet. Bei diesem Verfahren bleibt nur ein kleiner Prozentsatz der Mikroorganismen revitalisierbar. Die Bildung von Säuren im Brotteig erfolgt dabei nicht mehr durch die Lebenstätigkeit der Bakterien im Teig, sondern die Stoffwechselprodukte der Bakterien werden im fertigen Zustand zugesetzt. Es handelt sich also um ein Säuerungsmittel.

Dies gilt auch für das nach der DDR-Patentschrift 671 129 hergestellte Produkt. Bei diesem bekannten Verfahren wird eine Nährflüssigkeit durch Säurebakterien vergoren und die gebildete Säure zunächst mit Basen abgestumpft. Dieser Vorgang kann auch wiederholt werden. Die gebundene Säure wird durch Zusatz einer stärkeren Säure, z.B. Schwefelsäure, wieder freigesetzt. Die Säureflüssigkeit kann, gegebenenfalls nach Abtrennung der ungelösten Bestandteile, vor oder während der Herstellung eines Trokkensauers so weit erhitzt werden, daß die Säurebakterien nicht mehr vermehrungsfähig sind. Es handelt sich also auch hier um die Herstellung eines Säuerungsmittels und nicht um die eines getrockneten Sauerteiges, der für die Herstellung eines Anstellgutes zur Sauerteigbereitung geeignet ist.

In der deutschen Offenlegungsschrift 3504 686 wird ein Verfahren zur Herstellung einer lagerfähigen gebrauchsfertigen Sauerteig-Mehlmischung beschrieben. Danach wird ein durch Mikroorganismen gegorener Sauerteig mit Mehl zu einer Sauerteig-Mehlmasse verarbeitet, welcher Hefe zugesetzt wird. Die Trocknung erfolgt unter Zugabe von Salz in zwei Stufen, nämlich einer Vortrocknung bei 20 - 30 °C und einer Nachtrocknung bei 40 - 60 °C. Durch Zugabe von Wasser und gleichzeitigem intensiven Kneten erhält man aus dieser lagerfähigen Masse einen Teig, der nach einer gewissen Lagerzeit, Formung und Teigruhe gebacken werden kann. Dieses Verfahren ist nicht zur Herstellung eines revitalisierbaren Sauerteigs, sondern nur zur Herstellung von backfertigen Teigen geeignet.

Bei dem in der österreichischen Patentschrift 360 460 beschriebenen Verfahren zur Herstellung eines trockenen, biologisch aktiven Sauerteiges wird ein Sauerteig aus Milchsäurebakterien-Reinzuchtkulturen hergestellt, nach Beendigung der Gärung granuliert und die Granulatteilchen werden durch einen warmen Luftstrom getrocknet. Bei der Führung des zur Trocknung bestimmten Sauerteiges wird die Gärung bei einem pH-Wert von 4 - 4,3 durch Anfrischen, d.h. erneute Zugabe eines frischen Mehl-Wasser-Gemisches, erneut angeregt. Dies soll die Aromabildung verstärken. Nach diesem Verfahren erhält man einen Sauerteig mit einer geringen Konzentration an Lactobacillen (hoher Mehlanteil). Bei einer zweistufigen Sauerteigführung, z.B. zur Herstellung von Roggen-Mischbrot, sind deshalb ein konzentrierter Einsatz dieses getrockneten Sauerteiges und lange Abstehzeiten (zwei Stufen mit je 24 Stunden) erforderlich.

Gemäß der deutschen Offenlegungsschrift 33 35 351 wird ein Sauerteig in Trockenform in der Weise hergestellt, daß eine thermostabile osmotolerante Lactobacillen-Reinkultur durch Temperaturscreening in mehreren Stufen isoliert wird, aus dieser unter Hefezusatz ein Sauerteig hergestellt wird und diesem vor der Trocknung als Schutzkolloid Magermilchpulver zugesetzt wird. Die Trocknung erfolgt bei 75 - 80°C vorzugsweise mit einem Vakuum-Walzentrockner. Dieses Verfahren hat den Nachteil, daß die Herstellung der Lactobacillen-Kultur sehr aufwendig ist. Der damit hergestellte Sauerteig verfügt trotz eines hohen Anteils an Schutzkolloid nach der Trocknung bei relativ hohen Temperaturen nur über einen geringen Anteil revitalisierbarer Mikroorganismen.

Aus der EP-A-0 131 114 ist ein Verfahren zur Herstellung eines trockenen Bakterien-Präparates bekannt, das als Sauerteig-Starter für die Herstellung von Backwaren oder als Starter für die Herstellung von Milchprodukten oder gesäuerten Futtermitteln verwendbar ist. Die Herstellung bedingt die Verwendung ganz bestimmter hochreiner Zellsuspensionen auf Basis spezieller Zellkulturen des Lactobacillus Casei, eine spezielle Nährlösung, steriles Arbeiten und Gewinnung des Zellkonzentrates durch Zentrifugieren. Hieraus resultiert ein außerordentlich hoher Herstellungsaufwand.

Zusammenfassend ist festzustellen, daß viele Verfahren zur Herstellung von Säuerungsmitteln und Sauerteigprodukten, insbesondere in trockener Form, bekannt sind. Die bekannten Verfahren haben aber, soweit sie überhaupt zu einem revitalisierbare Mikroorganismen enthaltenden Sauerteigprodukt und nicht nur zu Säuerungsmitteln führen, den Nachteil, daß sie sehr aufwendig sind. Darüberhinaus führt die Mehrzahl der Verfahren zu Produkten, die nicht in ausreichendem Maße revitalisierbar sind.

Der Erfindung liegt die Aufgabe zugrunde, ein Verfahren zur Herstellung von Sauerteigprodukten aufzuzeigen, welches verhältnismäßig einfach ist und zu einem qualitativ hochwertigen Sauerteigprodukt führt. Insbesondere soll es einen hohen Anteil von nach Lagerung revitalisierbaren Mikroorganismen enthalten.

Die Aufgabe wird durch ein Verfahren gemäß Anspruch 1 gelöst.

Als Sauerteigansatz wird hier das den Fermentationsprozeß durchlaufende Gemisch von der Mischung bis zur Beendigung der Fermentation bezeichnet. Wie eingangs erläutert, ist die exponentielle Wachstumsphase des Ansatzes durch eine starke Vermehrung der Mikroorganismen und demzufolge hohe Säureproduktion gekennzeichnet. Vor dem Zusatz der pH-erhöhenden Substanz sollte der Sauerteigansatz so weit gereift sein, daß der pH-Wert nach dem Mischen des Ansatzes um mindestens eine Einheit abgenommen hat. Die Bedingung, daß der Zusatz in der exponentiellen Wachstumsphase erfolgen soll, ist weiterhin so zu verstehen, daß die pH-erhöhende Substanz nicht erst am Ende des Fermentationsprozesses zugegeben wird, sondern so, daß sich der Sauerteigansatz danach (bzw. bei kontinuierlicher Zugabe während des Zusetzens) längere Zeit in der exponentiellen Phase befindet.

Als pH-erhöhende Substanz kann eine Base (z.B. NaOH oder KOH) oder ein Puffergemisch verwendet werden. Die pH-erhöhende Wirkung kann jedoch (besonders bevorzugt) auch durch Zugabe von CaCO₃ bewirkt werden, wobei in diesem Falle die Erhöhung des pH-Wertes darauf zurückzuführen ist, daß sich gasförmiges CO₂ bildet, welches aus dem Sauerteigansatz entweicht und diesem somit Säure entzieht. Soweit im folgenden wegen der besseren Anschaulichkeit von einer "puffernden oder basischen Substanz" gesprochen wird, ist hiermit ohne Beschränkung der Allgemeinheit eine pH-erhöhende Substanz im vorstehenden Sinne gemeint.

Die durch die Mikroorganismen gebildeten Säuren werden durch die Zugabe der puffernden bzw. basischen Substanz neutralisiert. Durch die Erhöhung des pH-Wertes werden die noch vorhandenen Getreidemahlprodukte weiter verstoffwechselt und die Keimzahl der sich weiterhin in der exponentiellen Wachstumsphase befindlichen Bakterien wesentlich erhöht. Man läßt den Fermentationsprozeß in der exponentiellen Wachstumsphase unter Zugabe der pH-erhöhenden Substanz fortschreiten, bis die gewünschte Konzentration der Mikroorganismen erreicht ist. In der exponentiellen Wachstumsphase besitzen die Lactobacillen die höchste Aktivität und, wenn sie aus dieser Wachstumsphase heraus durch Kühlung oder Trocknung haltbar gemacht werden, auch die höchste Revitalisierbarkeit.

Die Relation zwischen Anstellgut und Getreidemahlprodukten zu Beginn des Verfahrens kann in weiten Grenzen schwanken. Geeignet sind Teigausbeuten zwischen etwa 180 und 500, bevorzugt zwischen 180 und 280.

Gemäß einer bevorzugten Ausführungsform werden zu Beginn oder während der Fermentation -im letzteren Fall zweckmäßigerweise zusammen mit der pH-erhöhenden Substanz-Vitamine, insbesondere Vitamine des B-Komplexes oder Biotin zugesetzt. Dies führt zu einer weiteren Erhöhung der Konzentration revitalisierbarer Mikroorganismen in dem erzeugten Sauerteigprodukt.

Die im einzelnen bei der Benutzung der Erfindung zu beachtenden Verfahrensbedingungen hängen stark von Art und Qualität der Ausgangsprodukte (insbesondere des Anstellgutes und des Getreidemahlproduktes) ab. Vorzugsweise sollten folgende Regeln beachtet werden:

Die zugegebene Menge der Base oder des Puffers soll so bestimmt sein, daß der Sauerteigansatz erheblich länger in der exponentiellen Wachstumsphase bleibt, als bei ununterbrochener Fermentation ohne den Zusatz. Genaue quantitative Angaben können in Anbetracht der Verschiedenheit der Ausgangsbestandteile nicht gemacht werden, jedoch sollte die Reifezeit im mittleren pH-Wert-Bereich, welcher im Regelfall zwischen etwa pH 4,5 und pH 5,5 liegt, durch die Zugabe der pH-erhöhenden Substanz mindestens etwa um einen Faktor 2 erhöht werden. Als Untergrenze der Dosierung der pH-erhöhenden Substanz ist eine Menge anzusehen, die den pH-Wert bei diskontinuierlicher Einzeldosierung aus dem unteren pH-Bereich um mindestens 1,5 pH-Punkte anhebt.

Die Zugabe der puffernden oder basischen Substanz kann in einer oder mehreren Einzeldosen oder auch kontinuierlich erfolgen. Sofern Einzeldosen zugegeben werden, erfolgt die Zugabe vorzugsweise in einem Stadium, in dem der pH-Wert verhältnismäßig weit (auf weniger als pH 4,5) abgesunken ist. Die Zugabe erfolgt bevorzugt in verhältnismäßig großen Einzeldosen, nämlich in einer solchen Menge, daß der pH nach der Zugabe einer Einzeldosis auf mindestens pH 5,5, vorzugsweise mindestens pH 6 ansteigt.

Die Fermentation erfolgt zweckmäßigerweise bei erhöhter Temperatur, wobei sich Temperaturen oberhalb von etwa 25° , insbesondere oberhalb von 28°C als besonders vorteilhaft erwiesen haben. Die Temperatur sollte im Regelfall nicht über 32°C ansteigen.

Auch die Verfahrensdauer unterliegt je nach den verwendeten Ausgangsprodukten und den übrigen Parametern großen Schwankungen. Wichtig ist wie erwähnt, daß der Ansatz durch die Pufferung sich ungewöhnlich lange in dem Bereich des exponentiellen Mikroorganismenwachstums (also in einem mittleren pH-Bereich) befindet. Als Richtwert läßt sich angeben, daß die Dauer der Fermentation zwischen pH = 6 und pH = 4 mindestens etwa 10 Stunden, vorzugsweise mindestens etwa 20 Stunden betragen sollte.

Bei einer besonders bevorzugten Verfahrensweise läßt man einen Sauerteig natürlich reifen, bis der pH-Wert unter pH 4,5, vorzugsweise unter pH 4 abgesunken ist. Danach wird durch Zugabe von puffernden oder basischen Stoffen bis auf einen pH-Wert oberhalb von 6, insbesondere zwischen 6,2 und 6,8 neutralisiert. Anschließend folgt eine Reifung bei erhöhten Temperaturen (vorzugsweise zwischen 28 und 32°C) über einen längeren Zeitraum (mindestens 15, bevorzugt 20 bis 26 Stunden). Nach einem solchen Zyklus hat sich die Konzentration der Mikroorganismen um mehrere Zehnerpotenzen erhöht. Liegt die mikroskopisch bestimmte Keimzahl bei dem gereiften Sauerteig (vor Zugabe der pH-erhöhenden Substanz) bei etwa 10⁸, so werden nach Ablauf des Zyklus Werte von etwa 10⁹ bis 10¹⁰ festgestellt. Der Zyklus, bestehend aus Zugabe der puffernden oder basischen Substanz und Reifung, kann ein- oder mehrmals wiederholt werden, wobei sich je nach den Bedingungen des Einzelfalls Keimzahlen über 10¹⁰ erreichen lassen.

Die Zugabe der pH-erhöhenden Substanz kann statt der beschriebenen diskontinuierlichen Verfahrensweise auch kontinuierlich erfolgen. Dabei erfolgt die Zugabe der Base oder des Puffers in einer solchen Weise, daß der pH-Wert über längere Zeit zwischen pH 5 und pH 6 gehalten wird. Die Menge und die Zeitdauer der Zugabe sowie die übrigen Verfahrensbedingungen können auf Basis der vorstehenden Erläuterungen gewählt werden. Es ist auch möglich, in einem kombinierten Verfahren die pH-erhöhende Substanz teilweise diskontinuierlich und teilweise kontinuierlich zuzugeben.

Allgemein sollte die Zugabe der pH-erhöhenden Substanz in einer solchen Menge und Art und Weise erfolgen, daß eine deutliche Erhöhung der Konzentration von Mikroorganismen erreicht wird, die auch nach einer schonenden Trocknung so gut revitalisierbar sind, daß sie als Ausgangspunkt für die Sauerteigbereitung verwendet werden können. Quantitativ kann man sagen, daß mit einem erfindungsgemäßen Sauerteigprodukt, auch wenn es in getrockneter Form vorliegt, leicht und einfach ein Anstellgut für die Sauerteigbereitung hergestellt werden kann, bei dem die Konzentration an revitalisierbaren Mikroorganismen in dem Sauerteigprodukt so hoch ist, daß 10 % Trockensauerprodukt (bezogen auf die Mehleinsatzmenge des Anstellgutes) ausreichend sind.

Ein weiterer Vorteil des erfindungsgemäßen Verfahrens ist der geringe Restsäuregehalt des Produktes, der wesentlich zur Erhöhung der Überlebensrate der Mikroorganismen bei der Lagerung beiträgt. Darüberhinaus ist das erfindungsgemäß hergestellte Sauerteigprodukt vielseitig einsetzbar.

Das erfindungsgemäß hergestellte Sauerteigprodukt kann grundsätzlich am Ende des Fermentationsprozesses abgefüllt und kurzfristig frisch weiterverarbeitet werden. Seine Vorteile wirken sich aber in besonderem Maße aus, wenn es nach der Fermentation durch Kühlen oder (bevorzugt) durch Trocknen haltbar und damit lagerfähig gemacht wird. Dabei sollte der pH-Wert am Ende des Fermentationsprozesses, also unmittelbar bevor das Feuchtprodukt gekühlt bzw. getrocknet wird, auf einen relativ hohen pH-Wert von mindestens pH 5, bevorzugt mindestens 5,5, erhöht werden. Zum Kühlen bzw. Trocknen können verschiedene bekannte Verfahren eingesetzt werden.

Gemäß einer besonders bevorzugten Verfahrensführung wird das feuchte Sauerteigprodukt aus der exponentiellen Wachstumsphase heraus zum gleichzeitigen Trocknen und Granulieren auf eine aus pulverförmigen Trägerstoffen bestehende Wirbelschicht aufgesprüht, wobei die Wirbelschicht zweckmäßigerweise Getreidemahlprodukte enthält. Dabei ist wichtig, daß das feuchte Sauerteigprodukt gleichmäßig auf eine in ihrer Zusammensetzung homogene Wirbelschicht aufgesprüht wird. Geeignet ist deshalb insbesondere ein diskontinuierliches Verfahren, bei dem die Wirbelschichtgranulation chargenweise erfolgt.

Die Wirbelschichtgranulation eines Sauerteigproduktes ist aus der DDR-Patentschrift 226 475 bekannt. Die besondere Eignung eines derartigen Verfahrens zur Herstellung eines Trockensauerteigproduktes auf Basis der vorliegenden Erfindung muß jedoch als überraschend angesehen werden, weil der Sauerteigansatz im Augenblick des Versprühens eine hohe Viskosität aufweist, die ihn gerade für ein Verfahren, bei dem ein gleichmäßiges Versprühen erforderlich ist, wenig geeignet erscheinen läßt. In der Tat muß insoweit ein gewisser technologischer Aufwand getrieben werden, jedoch stehen geeignete Sprühverfahren auch für solche hochviskosen Substanzen zur Verfügung und es wurde im Rahmen der vorliegenden Erfindung festgestellt, daß der bei der Herstellung erforderliche Aufwand im Hinblick auf die hervorragende Qualität des erhältlichen Sauerteigproduktes, insbesondere einen außerordentlich hohen Anteil an revitalisierbaren Mikroorganismen, gerechtfertigt ist.

### Ausführungsbeispiele:

### Beispiel 1

12 kg natürlich gereifter Sauerteig auf der Basis von Roggenmehl mit einem pH-Wert von 4,1, einem Säuregehalt von 14,0, einer Teigausbeute von 280 und einem Gehalt an Lactobacillen von 10⁷ KBE(Kolonien bildende Einheiten)/g werden mit 1350 g einer 50%igen wäßrigen Aufschlämmung aus CaCO₃ bis zum pH-Wert von 6,5 neutralisiert. Zur Stimulierung der Reifung werden 4,2 g Vitamine des B-Komplexes zugesetzt. Anschließend wird der Sauerteig 22 Stunden einer Reifung bei einer Temperatur von 32°C unterzogen. Der pH-Wert sinkt dabei auf 4,0 und die Lactobacillenanzahl steigt auf 5 x 10⁸ KBE/g an.

Der Sauerteig wird mit 1100 g einer 50%igen wäßrigen Aufschlämmung aus CaCO₃ erneut bis zum pH-Wert von 6,6 neutralisiert und einer weiteren Reifung über 24 h bei 30°C ausgesetzt. Der pH-Wert sinkt auf 4,1 ab und die Lactobacillenkonzentration steigt auf 5 x 10¹⁰ KBE/g an.

Nach Neutralisation mit 1200g einer 50%igen wäßrigen Aufschlämmung aus CaCO₃ bis zum pH-Wert von 6,6 und Zugabe von 34,2 g Milchpulver wird der Reifungsansatz mit Hilfe der Wirbelschichtgranulation schonend getrocknet.

### Beispiel 2:

12 kg natürlich gereifter Sauerteig nach Beispiel 1 werden mit 1517 g 48%iger KOH bis zum pH-Wert 6,7 neutralisiert. Nach einer ersten 24-stündigen Reifung bei 29°C erfolgt eine zweite Neutralisierung mit 1283 g 48%iger KOH bis zum pH-Wert 6,8. Nach der zweiten 20-stündigen Reifung bei 32°C wird abermals mit 1400g 48%iger KOH bis zum pH-Wert von 6,6 neutralisiert und anschließend mit 857 g einer wäßrigen 10%igen Emulsion aus Milcheiweiß und Fett vermischt.

Der Lactobacillengehalt beträgt dann 5 x 10¹⁰ bis 10¹¹ KBE/g. Die Trocknung erfolgt analog Beispiel 1.

## Patentansprüche

1. Verfahren zur Herstellung eines Sauerteigproduktes, bei dem man ein Getreidemahlprodukt mit Wasser und Anstellgut zu einem Sauerteigansatz mischt und reifen läßt, wobei der Sauerteigansatz einen Fermentationsprozeß durchläuft, in welchem die darin enthaltenen Mikroorganismen nach einer Lag-Phase in eine exponentielle Wachstumsphase übergehen, **dadurch gekennzeichnet**, daß man zur Erzielung eines Sauerteigproduktes mit einer erhöhten Konzentration von revitalisierbaren Mikroorganismen während der expotentiellen Wachstumsphase eine pH-erhöhende Substanz zusetzt.

2. Verfahren nach Anspruch 1, **dadurch gekennzeichnet**, daß man den Sauerteigansatz am Ende des Fermentationsprozesses durch Kühlen oder Trocknen lagerfähig macht.

3. Verfahren nach Anspruch 2, **dadurch gekennzeichnet**, daß man den Sauerteigansatz am Ende des Fermentationsprozesses vor dem Kühlen oder Trocknen auf einen pH-Wert von mindestens 5 bringt.

4. Verfahren nach einem der Ansprüche 2 oder 3, **dadurch gekennzeichnet,** daß man den Sauerteigansatz nach der Fermentation zum gleichzeitigen Trocknen und Granulieren auf eine vorzugsweise Getreidemahlprodukte enthaltende Wirbelschicht eines pulverförmigen Trägerstoffes aufsprüht.

5. Verfahren nach einem der vorhergehenden Ansprüche, **dadurch gekennzeichnet**, daß man als pH-erhöhende Substanz CaCO₃, KOH oder NaOH verwendet.

6. Verfahren nach einem der vorhergehenden Ansprüche, **dadurch gekennzeichnet,** daß man dem Sauerteigansatz Biotin oder Vitamine, insbesondere des B-Komplexes, zusetzt.

7. Verfahren nach einem der vorhergehenden Ansprüche, **dadurch gekennzeichnet,** daß man die pH-erhöhende Substanz diskontinuierlich in Einzeldosen zusetzt.

8. Verfahren nach Anspruch 7, **dadurch gekennzeichnet**, daß man eine Einzeldosis der pH-erhöhenden Substanz zu einem Zeitpunkt zusetzt, in dem der pH-Wert auf weniger als pH 4,5 abgesunken ist.

9. Verfahren nach Anspruch 7 oder 8, **dadurch gekennzeichnet**, daß man die Einzeldosis der pH-erhöhenden Substanz so bemißt, daß der pH-Wert über pH 5,5, bevorzugt über pH 6 ansteigt.

10. Verfahren nach einem der vorhergehenden Ansprüche, **dadurch gekennzeichnet**, daß der pH-Wert durch kontinuierliche Zugabe der pH-erhöhenden Substanz innerhalb der exponentiellen Wachstumsphase zwischen pH 5 und pH 6 konstant gehalten wird.

## Claims

1. Process for preparation of a sourdough product, in which a product of cereal milling is mixed with water and a starter sourdough culture to form an inoculated sourdough, which is allowed to mature, whereby the inoculated sourdough passes through a fermentation process, in which, after a lag-phase, the micro-organisms contained therein turn into an exponential growth-phase, characterized in that a pH-raising substance is added during the exponential growth phase in order to obtain a sourdough product with an increased concentration of revitalizable micro-organisms.

2. Process according to claim 1, characterized in that the inoculated sourdough is cooled or dried at the end of the fermentation process in order to make the product storable.

3. Process according to claim 2, characterized in that the inoculated sourdough is raised to at least pH 5 before cooling or drying at the end of the fermentation process.

4. Process according to claim 1 or 2, characterized in that the inoculated sourdough is sprayed on a fluidized bed of a powdershaped carrier, preferably containing cereal milling products, for drying and granulating the product at the same time at the end of the fermentation process.

5. Process according to any of the preceding claims, characterized in that CaCO₃, KOH or NaOH is used as pH-rising substance.

6. Process according to any of the preceding claims, characterized in that Biotin or Vitamins, especially the group of B-Vitamins, are added to the inoculated sourdough.

7. Process according to any of the preceding claims, characterized in that the pH-raising substance is added in discontinuous single doses.

8. Process according to claim 7, characterized in that a single dose of the pH-raising substance is added when the pH is decreased below a limit of 4.5.

9. Process according to claim 7 or 8, characterized in that the amount of a single dose of the pH-raising substance is so adjusted that the pH value is raised above 5.5, preferebly above 6.0.

10. Process according to any of the preceding claims, characterized in that the pH is constantly regulated in a range between 5 to 6 by continuous addition of the pH-raising substance during the exponential growth phase.

## Revendications

1. Procédé pour la fabrication d'un produit au levain, dans lequel un produit de la mouture de céréales est mélangé avec de l'eau et un levain-chef en une préparation au levain, et soumis à maturation, la préparation au levain subissant un processus de fermentation, dans lequel les micro-organismes, contenus dans cette préparation, passent dans une phase de croissance exponentielle après une phase de retard, caractérisé en ce qu'une substance élevant le pH est ajoutée pendant la phase de croissance exponentielle, pour obtenir un produit au levain d'une teneur élevée en micro-organismes revitalisables.

2. Procédé suivant la revendication 1, caractérisé en ce que la préparation au levain est rendue susceptible de stockage, à la fin du processus de fermentation, par refroidissement ou par séchage.

3. Procédé suivant la revendication 2, caractérisé en ce que la préparation au levain est portée à un pH de 5 au moins, à la fin du processus de fermentation, avant le refroidissement ou le séchage.

4. Procédé suivant l'une quelconque des revendications 2 et 3, caractérisé en ce que la préparation au levain, après la fermentation, est pulvérisée sur un lit fluidisé, composé d'un support pulvérulent et contenant de préférence des produits de la mouture de céréales, en vue d'un séchage et d'une granulation simultanés.

5. Procédé suivant l'une quelconque des revendications précédentes, caractérisé par l'utilisation de carbonate de calcium CaCO₃, d'hydroxyde de potassium KOH ou d'hydroxyde de sodium NaOH, comme substances élévatrices du pH.

6. Procédé suivant l'une quelconque des revendications précédentes, caractérisé par l'addition de biotine ou de vitamines, du complexe B notamment, à la préparation au levain.

7. Procédé suivant l'une quelconque des revendications précédentes, caractérisé par l'addition discontinue, par doses individuelles, de la substance élevant le pH.

8. Procédé suivant la revendication 7, caractérisé par l'addition d'une dose individuelle de la substance élevant le pH, à un instant où la valeur pH s'est abaissée à moins de 4,5.

9. Procédé suivant l'une des revendications 7 et 8, caractérisé en ce que la dose individuelle de la substance élevant le pH est calculée, de sorte que le pH s'élève à plus de 5,5, à plus de 6 de préférence.

10. Procédé suivant l'une quelconque des revendications précédentes, caractérisé en ce que le pH est maintenu à une valeur constante, comprise entre 5 et 6, par addition continue de la substance élevant le pH, à l'intérieur de la phase de croissance exponentielle.
